Europäisches Patentamt

European Patent Office

Office européen des brevets

(19)

(11) Veröffentlichungsnummer: **0 287 648 B1**

(12) # EUROPÄISCHE PATENTSCHRIFT

(45) Veröffentlichungstag der Patentschrift:
06.11.91 Patentblatt 91/45

(51) Int. Cl.⁵: **G11B 7/09, G03B 3/10,**
**G02B 7/28**

(21) Anmeldenummer: **87907313.8**

(22) Anmeldetag: **21.10.87**

(86) Internationale Anmeldenummer:
**PCT/EP87/00620**

(87) Internationale Veröffentlichungsnummer:
**WO 88/03309 05.05.88 Gazette 88/10**

(54) **MIT STRAHLEN ABTASTENDES ABTASTSYSTEM.**

(30) Priorität: **22.10.86 DE 3635840**

(43) Veröffentlichungstag der Anmeldung:
**26.10.88 Patentblatt 88/43**

(45) Bekanntmachung des Hinweises auf die
Patenterteilung:
**06.11.91 Patentblatt 91/45**

(84) Benannte Vertragsstaaten:
**AT BE CH DE FR GB IT LI LU NL SE**

(56) Entgegenhaltungen:
**EP-A- 0 157 020**
**DE-A- 1 439 900**
**FR-A- 2 338 613**

(56) Entgegenhaltungen:
**GB-A- 2 120 493**
**US-A- 4 527 893**
**Patent Abstracts of Japan, vol.8, No.257
(p-316)(1694) 24 November 1984, & JP, A,
59127238**
**Patent Abstracts of Japan, vol.9, no. 16,
(P-329)(1739) 23 January 1985, & JP, A,
59162650**

(73) Patentinhaber: **Deutsche Thomson-Brandt
GmbH**
**Hermann-Schwer-Strasse 3 Postfach 1307**
**W-7730 Villingen-Schwenningen (DE)**

(72) Erfinder: **ZUCKER, Friedhelm**
**Frankenstrasse 5**
**W-7730 Villingen-Schwenningen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein mit Strahlen eine Fläche abtastendes Abtastsystem, bei dem von einer Strahlungsquelle ausgesendete Strahlen von der abzutastenden Fläche reflektiert und mittels eines.-oder mehrerer fokussierender Elemente auf einen Strahlungsdetektor fokussiert werden,der aus mindestens zwei Einzeldetektoren aufgebaut ist, aus deren Ausgangssignalen ein Summensignal und mindestens ein Differenzsignal gebildet wird.

Optische Abtastsysteme dieser Art - häufig als optical pick-up bezeichnet - werden z.B. in CD-Spielern eingesetzt, um die auf der CD-Platte gespeicherten Informationen abzunehmen. Als Strahlungsquelle dient in der Regel eine Laser- Diode, als fokussierende Elemente sind Linsen vorgesehen, und beim Strahlungsdetektor handelt es sich um einen Photodetektor.

In Electronic components & applications, Volume 6, No. 4, 1984 sind auf Seite 209 - 215 Aufbau und Funktion eines optischen Abtastsystems für einen CD-Spieler beschrieben. Neben dem in der angegebenen Literaturstelle gezeigten Beispiel gibt es weitere Abtastsysteme, die alle im wesentlichen jedoch ähnlich aufgebaut sind und nach ähnlichen Prinzipien arbeiten.

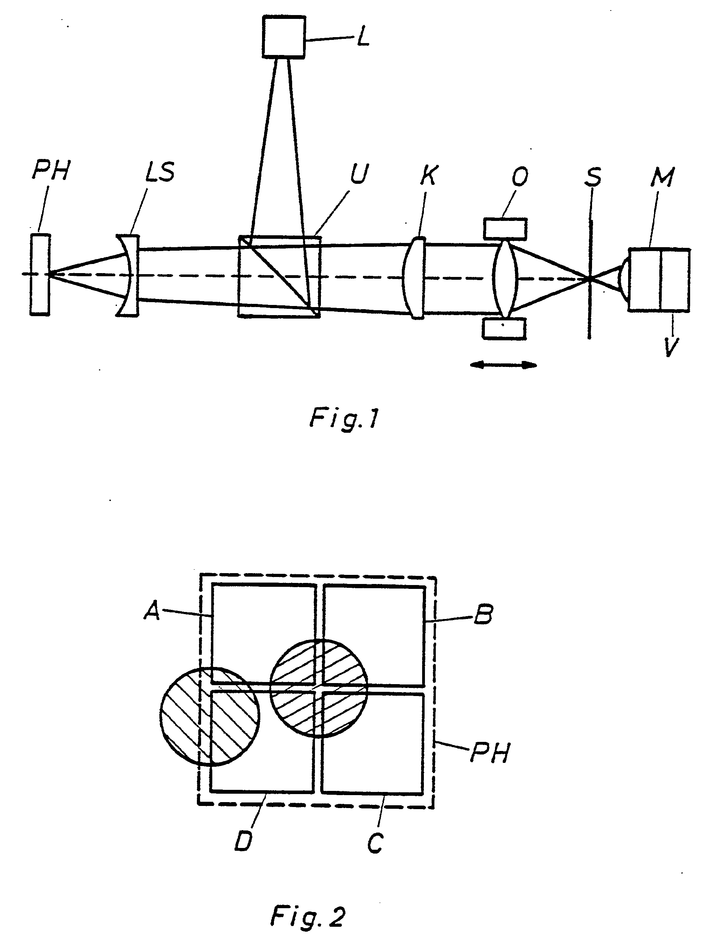

In Figur 2a auf Seite 213 der genannten Literaturstelle ist der Strahlengang bei einem optischen Abtastsystem dargestellt. Die von einer Laser-Diode ausgesendeten Strahlen werden über einen Prismenstrahlteiler, eine Kollimatorlinse und eine Objektivlinse auf die Spiegelfläche der CD-Platte fokussiert, von wo sie über die Objektivlinse und die Kollimatorlinse zurück zum Prismenstrahlteiler reflektiert werden. Der Prismenstrahlteiler reflektiert als Umlenkeinheit die von der CD-Platte reflektierten Strahlen im rechten Winkel über eine zylindrische Linse auf den Photodetektor, der aus vier gleich großen quadratischen Elementen A, B, C und D besteht, die zu einem Quadrat zusammengefasst sind. Wenn der Lichtstrahl genau auf der CD-Platte fokussiert ist, bildet der von der CD-Platte reflektierte Strahl auf dem Photodetektor einen Kreis. Das aus den vier Ausgangssignalen der vier Elemente A, B, C und D gebildete Differenzsignal $(A+C) - (B+D)$ wird dann null, während das Summensignal seinen Maximalwert annimmt, weil alles von der CD-Platte reflektierte Licht auf den Photodetektor fällt. Bei geringer Defokussierung nimmt das Differenzsignal $(A+C) - (B+D)$ einen von null verschiedenen Wert an, weil der Lichtfleck auf dem Photodetektor infolge der astigmatisch wirkenden zylindrischen Linse von der Kreisform in eine Ellipsenform übergeht. Am Differenzsignal $(A+C) - (B+D)$, oft auch Fokusfehlersignal genannt, erkennt der Fokusregelkreis, wo der Brennpunkt liegt, auf, vor oder hinter der Spiegelfläche der CD-Platte.

Durch Verschieben der Objektivlinse in Richtung der optischen Achse sorgt der Fokusregelkreis dafür, daß der Brennpunkt stets auf der Spiegelfläche der CD-Platte liegt. Dieser feine Regelvorgang, der sich im Mikrometerbereich abspielt, setzt natürlich eine ebenso genaue Justierung des Photodetektors sowohl bezüglich des Abstandes vom Prismenstrahlteiler als auch bezüglich der optischen Achse voraus.

Um den Photodetektor zentrisch zur optischen Achse zu justieren, geht man folgendermaßen vor. Anstelle der CD-Platte wird ein halbdurchlässiger Spiegel angebracht, hinter dem eine Videokamera mit Mikroskop angeordnet ist. Zunächst wird der Brennpunkt genau auf den halbdurchlässigen Spiegel fokussiert.Mit dem Mikroskop und der Videokamera wird diese Einstellung überprüft. Erst jetzt, nachdem der Fokus genau auf der Oberfläche des halbdurchlässigen Spiegels liegt, kann der Photodetektor in der Ebene senkrecht zur optischen Achse justiert werden. Er liegt genau dann zentral, wenn die Differenzsignale $(A+B) - (C+D)$ und$(A+D) - (B+C)$ null werden, während das Summensignal maximal wird, weil dann alles vom halbdurchlässigen Spiegel reflektierte Licht auf ihn fällt.

Die Person, welche den Photodetektor justiert, muß deshalb den Photodetektor solange in der Ebene senkrecht zur optischen Achse verschieben, bis das Differenzsignal null wird. Nun liegt der Photodetektor in der richtigen Lage und kann festgeschraubt werden. Diese Justierarbeiten erfordern viel Geduld und Fingerspitzengefühl. Während der Justierarbeiten kann es ausserdem vorkommen, daß die Objektivlinse unabsichtlich verstellt wird, so daß erneut der Brennpunkt auf die Oberfläche des halbdurchlässigen Spiegels fokussiert werden muß. Bereits Verstellungen der Objektivlinse im Bereich von Mikrometern erfordern eine Neueinstellung. Es läßt sich daher leicht erahnen, wieviel Zeit, welch große Geduld und welch feines Fingerspitzengefühl von der Person, die die Justierarbeiten durchführt, aufgebracht werden müssen.

Aus der EP-A 0 157 020 ist ein optisches Abtastsystem bekannt, das einen Laserstrahl mittels einer Objektivlinse auf eine optische Platte fokussiert, um die auf der optischen Platte aufgezeichneten Daten lesen zu können. Von der optischen Platte wied der Laserstrahl auf einen sogenannten Vierquadrantenphotodetektor reflektiert.

Vom Differenzsignal $FOC = (A + C) - (B + D)$, das in der Europäischen Anmeldung als Fokusfehlersignal bezeichnet wird, wird ein Korrektursignal subtrahiert, das ebenfalls aus den Ausgangssignalen A, B, C und D des Vierquadrantenphotodetektors gewonnen wird.

Das Korrektursignal bewirkt, daß die Fokussierung nicht mehr durch den sogenannten Wandereffekt beeinträchtigt wird. Unter Wandereffekt versteht man das Wandern des Lichtflecks aus der Mitte des Vierquadrantenphotodetektors, wenn die Objektivlinse relativ zur optischen Platte bewegt wird.

Wenn die optische Achse des Laserstrahls nicht ganz genau parallel zur optischen Achse der Objektivlinse verläuft und nicht genau senkrecht zur optischen Platte steht, verursacht jede Bewegung der Objektivlinse entlang ihrer optischen Achse eine Verschiebung des Lichtflecks auf dem Vierquadrantenphotodetektor: Der Lichtfleck wandert auf dem Vierquadrantenphotodetektor. Deswegen kann der Vierquadrantenphotodetektor kein genaues Fokusfehlersignal erzeugen.

Es gibt daher nur eine Stellung der Objektivlinse, wo der Laserstrahl von der optischen Platte genau in die Mitte des Vierquadrantenphotodetektors reflektiert wird und wo ein genaues Fokussignal erzeugt wird. In allen anderen Stellungen der Objektivlinse liegt der Laserstrahl nicht zentrisch auf dem Vierquadrantenphotodetektor. Durch das Korrektursignal wird nun eine fehlerhafte Fokussierung des Laserstrahls auf die optische Platte infolge des Wanderefiektes weitgehend vermieden.

Um die einzelnen optischen Bauteile des optischen Abtastsystems genau zu justieren, führt die Objektivlinse entlang ihrer optischen Achse eine sinusförmige Schwingung aus. Das Korrektursignal wird auf dem Bildschirm eines Oszillographen verfolgt. Die einzelnen optischen Bauteile werden nun derart justiert, daß die durch die Sinusschwingung verursachten Schwankungen des Korrektursignals minimal werden. Die optischen Bauteile sind nun optimal im Strahlengang justiert.

Ein Nachteil dieses optischen Abtastsystems ist darin zu sehen, daß die Justierung der optischen Bauteile nicht automatisch erfolgt, sondern daß hierzu eine Person das Korrektursignal auf dem Bildschirm eines Oszillographen genau beobachten muß.

Es ist deshalb Aufgabe der Erfindung, bei einem Abtastsystem gemäß Oberbegriff des Anspruchs 1 und bei einem Verfahren gemäß Oberbegriff des Anspruchs 5 die Justierung des Strahlendetektors durch Automatisierung wesentlich zu vereinfachen.

Die Erfindung löst diese Aufgabe durch die in Ansprüche 1 und 5 angegebenen Merkmale.

Es zeigen

Figur 1 ein optisches Abtastsystem für einen CD-Spieler,
Figur 2 den Photodetektor mit eingezeichneter Lage des kreisförmigen Brennpunktes bei falscher und bei richtiger Justierung des Photodetektors,
Figur 3 eine Weiterbildung des erfindungsgemäßen Abtastsystems.

In Figur 1 strahlt eine Laser-Diode L Licht auf einen als Umlenkeinheit dienenden Prismenstrahlteiler U, der das von der Laser-Diode L ausgestrahlte Licht im rechten Winkel auf einen halbdurchlässigen Spiegel S reflektiert. Zwischen dem Prismenstrahlteiler U und dem halbdurchlässigen Spiegel S liegen eine Kollimatorlinse K und eine Objektivlinse O im Strahlengang. Der halbdurchlässige Spiegel S reflektiert einen Teil des auf ihn fallenden Lichtes durch die Objektivlinse O und die Kollimatorlinse K zurück zum Prismenstrahlteiler U, der einen Teil des Lichts geradlinig durchlassend auf den Photodetektor PH fallen läßt. Zwischen dem Photodetektor PH und dem Prismenstrahlteiler U ist eine Zylinderlinse LS im Strahlengang vorgesehen. Hinter dem halbdurchlässigen Spiegel S, an dessen Stelle sich bei Spielbetrieb des CD-Spielers die CD-Platte dreht, sind beim Stand der Technik ein Mikroskop M und eine Videokamera V angeordnet, um, wie bereits eingangs erläutert, die Einstellung des Brennpunktes auf dem halbdurchlässigen Spiegel S zu überprüfen. Während des Spielbetriebs wird die Objektivlinse 0, das Stellglied des Fokusregelkreises, vom Fokusregler stets so entlang der optischen Achse geführt, daß der Brennpunkt auf der Spiegelfläche der CD-Platte liegen bleibt. Die Objektivlinse O ist mittels in der Figur 1 nicht eingezeichneter Federn so befestigt, daß sie in Richtung der optischen Achse um eine Mittellage verschiebbar ist. Eine ebenfalls nicht eingezeichnete Spule bewirkt über die Größe ihres Magnetfeldes genau definierte Bewegungen der Objektivlinse O in Richtung der optischen Achse.

Es wird nun das erfindungsgemäße optische Abtastsystem anhand der Figuren 1 und 2 erläutert.

Die Objektivlinse O wird derart in Schwingungen längs der optischen Achse versetzt, daß der Brennpunkt bei Auslenkung in die eine Richtung vor, bei Auslenkung in die andere Richtung dagegen hinter dem halbdurchlässigen Spiegel S liegt. Anstelle des halbdurchlässigen Spiegels S kann ein gewöhnlicher Spiegel oder aber auch eine CD-Platte vorgesehen sein. Der Photodetektor PH kann z.B. aus vier gleich großen quadratischen Elementen A, B, C und D aufgebaut sein, die ein Quadrat bildend zusammengefügt sind, wie in Fig. 2 gezeigt ist.

Jedesmal wenn der auf den Photodetektor PH fallende Lichtfleck während des Schwingens der Objektivlinse O ein Maximum des Summensignals $T = AS+BS+CS+DS$ aus den vier Ausgangssignalen AS, BS, CS und DS der vier quadratischen Elemente A, B, C und D bewirkt, werden die beiden Differenzsignale $X = (BS+CS) - (AS+DS)$ und $Y = (AS+BS) - (DS+CS)$ gespeichert und optisch angezeigt. Anhand der Werte von X und Y kann die Person, welche die Justierarbeiten ausführt, erkennen, in welche Richtung sie den Photodetektor PH senkrecht zur optischen Achse verschieben muß, um ihn in die richtige Lage zu bringen. Sind beide Differenzsignale X und Y null, so liegt der Photodetektor PH in der richtigen Lage und kann festgeschraubt werden. Damit sind die Justierarbeiten bereits beendet.

Weil beim erfindungsgemäßen optischen Abtastsystem die Einstellung der Objektivlinse O vollkommen entfällt, werden das Mikroskop M und die Videokamera V nicht benötigt.

In Figur 2 ist der Lichtfleck sowohl bei richtiger Justierung als auch bei falscher Lage des Photodetektors PH eingezeichnet. Im ersten Fall liegt der kreisförmige Lichtfleck genau in der Mitte des aus den vier Elementen A, B, C und D gebildeten Quadrates, während er im letzten Fall beispielsweise den linken unteren Teil des Photodetektors PH beleuchtet. Die Form des Lichtflecks, kreisförmig oder wegen der astigmatisch wirkenden Zylinderlinse LS ellipsenförmig, spielt keine Rolle, weil unabhängig von der Form aus den zwei Differenzsignalen X und Y eindeutig die Lage des Lichtflecks auf dem Photodetektor PH bestimmbar ist.

Die Erfindung läßt sich bei einem CD-Spieler besonders leicht verwirklichen, weil, um die Objektivlinse O in die gewünschten Schwingungen längs der optischen Achse zu versetzen, lediglich an das Stellglied des Fokusregelkreises - die Spule, welche die Objektivlinse O bei Spielbetrieb verstellt - eine Wechselspannung gelegt werden muß. Konstruktive Maßnahmen entfallen daher vollkommen. Als vorteilhaft hat sich eine Frequenz von etwa 50Hz für die Wechselspannung gezeigt, die an die Spule gelegt wird, um die Schwingungen der Objektivlinse O zu erzeugen.

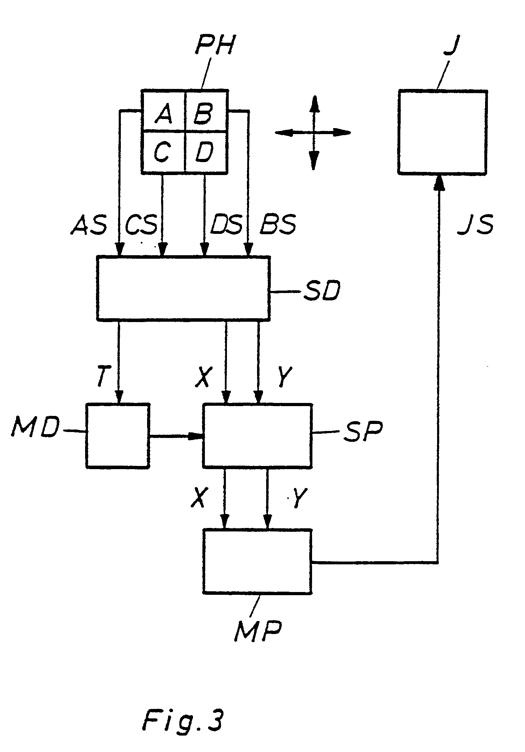

In einer vorteilhaften Weiterbildung der Erfindung, die in Figur 3 dargestellt ist, wird die Justierung des Photodetektors PH vollkommen automatisch durchgeführt. Die Ausgangssignale AS, BS, CS und DS der vier quadratischen Elemente A, B, C und D werden den Eingängen eines Summen- und Differenzbildners SD zugeführt, der das Summensignal T = AS+BS+ CS+DS sowie die Differenzsignale X = (BS+CS) - (AS+DS) und Y = (AS+BS) - (DS+CS) bildet. Die Ausgänge des Summen- und Differenzbildners SD, an denen die Differenzsignale X und Y anliegen, sind mit den Eingängen eines Speichers SP verbunden, der z.B. aus zwei Abtast- und Haltegliedern aufgebaut sein kann. Das Summensignal T wird einem Detektor MD zugeführt, der die Maxima des Summensignals T detektiert und jedesmal beim Auftreten eines Maximums bewirkt, daß die Differenzsignale X und Y vom Speicher SP übernommen werden. Ein Mikroprozessor MP fragt den Speicher SP zyklisch ab und errechnet aus den Differenzen X und Y eine Stellgröße JS für ein Stellglied J, das den Photodetektor PH, wie in Figur 3 angedeutet ist, senkrecht zur optischen Achse justiert.

Die automatische Justierung arbeitet wie ein Regelkreis: das Stellglied J verschiebt den Photodetektor PH solange, bis die Differenzsignale X und Y null werden. Damit ist der automatische Justiervorgang beendet.

Das erfindungsgemäße Abtastsystem ist zwar besonders für CD-Spieler geeignet, jedoch nicht darauf beschränkt. Es kann dann verwirklicht werden, wenn der Photodetektor mehrere Ausgangssignale liefert, aus denen ein Summensignal und mindestens ein Differenzsignal gebildet werden. Ob das Abtastsystem mit Lichtstrahlen oder anderen Strahlen arbeitet, ist ohne Belang.

**Patentansprüche**

1. Mit Strahlen eine Fläche (S) abtastendes Abtastsystem, bei dem von einer Strahlungsquelle (L) ausgesendete Strahlen von der abzutastenden Fläche (S) reflektiert und mittels eines oder mehrerer fokussierender Elemente (O) auf einen Strahlungsdetektor (PH) fokussiert werden, der aus mindestens zwei Einzeldetektoren (A, B, C, D) aufgebaut ist, aus deren Ausgangssignalen (AS, BS, CS, DS) ein Summensignal (T) und mindestens ein Differenzsignal (X,Y) gebildet wird, wobei zum Justieren des Strahlungsdetektors (PH) senkrecht zur optischen Achse entweder eines der fokussierenden Elemente (O) oder die Strahlungsquelle (L) oder die abzutastende Fläche (S) um seine bzw. ihre Mittellage in Schwingungen versetzt wird, **dadurch gekennzeichnet,** daß der Brennpunkt bei maximaler Auslenkung des schwingenden fokussierenden Elementes (O) bzw. der schwingenden Strahlungsquelle (L) bzw. der abzutastenden Fläche (S) in die eine Richtung vor, bei maximaler Auslenkung in die andere Richtung dagegen hinter dem Strahlungsdetektor (PH) zu liegen kommt, daß die Ausgangssignale (AS, BS, CS, DS) des Strahlungsdetektors (PH) einem Summen- und Differenzbildner (SD) zugeführt werden, daß ein Detektor (MD) die Maxima des Summensignals (T) detektiert und jedesmal beim Auftreten eines Maximums die Speicherung des Differenzsignals bzw. der Differenzsignale (X, Y) in einem Speicher (SP) bewirkt, daß ein Mikroprozessor (MP) den Speicher (SP) zyklisch abfragt und aus dem Differenzsignal bzw. den Differenzsignalen (X, Y) eine Stellgröße für ein Stellglied (J) errechnet, das den Strahlungsdetektor (PH) justiert.

2. Abtastsystem nach Anspruch 1, **dadurch gekennzeichnet,** daß als Strahlungsquelle (L) eine Lichtquelle, als Strahlungsdetektor (PH) ein Photodetektor und als fokussierende Elemente (O) Linsen vorgesehen sind.

3. Abtastsystem nach Anspruch 2, **dadurch gekennzeichnet,** daß die von der Lichtquelle (L) ausgesendeten Strahlen von einem Prismenstrahlteiler (U) rechtwinklig reflektiert werden, daß die rechtwinklig reflektierten Strahlen mittels einer Kollimatorlinse (K) und einer Objektivlinse (O) auf die reflektierende Fläche (S) fallen und daß die von der reflektierenden Fläche (S) reflektierten Strahlen mittels der Objektivlinse (O), der Kollimatorlinse (K), des Prismenstrahlteilers (U) und einer Zylinderlinse (LS) auf den Photodetektor (PH) gerichtet werden.

4. Abtastsystem nach Anspruch 3, **dadurch gekennzeichnet,** daß die Objektivlinse (O) in Schwingungen längs ihrer optischen Achse versetzt wird.

5. Verfahren zum Justierein des Strahlungsdetektors (PH) eines mit Strahlen eine Fläche (S) abtastenden Abtastsystems, bei dem von einer Strahlungsquelle (L) ausgesendete Strahlen von der abzutastenden Fläche (S) reflektiert und mittels eines oder mehrerer fokussierender Elemente (O) auf den Strahlungsdetektor (PH) fokussiert werden, der aus mindestens zwei Einzeldetektoren (A, B, C, D) aufgebaut ist, aus deren Ausgangssignalen (AS, BS, CS, DS) ein Summensignal (T) und mindestens ein Differenzsignal (X, Y) gebildet wird, wobei zum Justieren des Strahlungsdetektors (PH) senkrecht zur optischen Achse entweder eines der fokussierenden Elemente (O) oder die Strahlungsquelle (L) oder die abzutastende Fläche (S) um seine bzw. ihre Mittellage in Schwingungen versetzt wird, **dadurch gekennzeichnet,** daß der Brennpunkt bei maximaler Auslenkung des schwingenden fokussierenden Elementes (O) bzw. der schwingenden Strahlungsquelle (L) bzw. der abzutastenden Fläche (S) in die eine Richtung vor, bei maximaler Auslenkung in die andere Richtung dagegen hinter den Strahlungsdetektor (PH) zu liegen kommt, daß die Ausgangssignale (AS, BS, CS, DS) des Strahlungsdetektors (PH) einem Summen- und Differenzbildner (SD) zugeführt werden, daß ein Detektor die Maxima des Summensignals (T) detektiert und jedesmal beim Auftreten eines Maximums die Speicherung des Differenzsignals bzw. der Differerzsignale (X, Y) in einem Speicher (SP) bewirkt und daß ein Mikroprozessor (MP) den Speicher (SP) zyklisch abfragt und aus dem Differenzsignal bzw. den Differenzsignalen (X, Y) eine Stellgröße für ein Stellglied (J) errechnet, das den Strahlungsdetektor (PH) justiert.

**Claims**

1. A scanning system which scans a surface (S) with rays, in which rays emitted from a radiation source (L) are reflected from the surface (S) to be scanned and focussed by means of one or more focussing elements (O) on a radiation detector (PH) which is made up of at least two individual detectors (A, B, C, D), from the output-signals (AS, BS, CS, DS) of which a sum signal (T) and at least one difference signal (X,Y) are formed, and in which for adjusting the radiation detector (PH) perpendicularly to the optical axis either one of the focussing elements (C) or the radiation source (L) or the surface (S) to be scanned is made to oscillate about its central position, characterised in that in the case of maximum deflection of the oscillating focussing element or of the oscillating radiation source (L) or of the surface (S) to be scanned, in one direction, the focus takes up a position in front of the radiation detector (PH) whereas in the case of maximum deflection in the other direction it takes up a position behind the radiation detector, that the output signals (AS, BS, CS, DS) of the radiation detector (PH) are taken to a sum and difference former (SD), that a detector (MD) detects the maxima of the sum signal (T) and, whenever a maximum occurs, causes the difference signal or the difference signals (X,Y) to be stored in a store (SP) and that a microprocessor (MP) cyclically interrogates the store (SP) and calculates, from the difference signal or the difference signals (X,Y) a setting magnitude for a setting member (J) which adjusts the radiation detector (PH).

2. A scanning system according to Claim 1, characterised in that a light source is provided as the radiation source (L), a photodetector as the radiation detector (PH), and lenses as focussing elements (O).

3. A scanning system according to Claim 2, characterised in that the rays emitted from the light source (L) are reflected at right angles from a prism beam divider (U), that the rays reflected at right angles are made, by means of a collimator lens (K) and objective lens (O) to fall on the reflecting surface (S) and that the rays reflected from the reflecting surface (S) are directed on to the photodetector (PH) by means of the objective lens (C), the collimator lens (K), the prism beam divider (U) and a cylindrical lens (LS).

4. A scanning system according to Claim 3, characterised in that the objective lens (O) is made to oscillate along its optical axis.

5. A method of adjusting the radiation detector (PH) of a scanning system scanning the surface (S) with rays, in which the rays emitted from a radiation source (L) are reflected from the surface (S) to be scanned and focussed, by means of one or more focussing elements (O), on the radiation detector (PH) which is made up of at least two individual detectors (A, B, C, D) from the output signals (AS, BS, CS, DS) of which a sum signal (T) and at least one difference signal (X, Y) are formed, and in which for adjusting the radiation detector (PH) at right angles to the optical axis either one of the focussing elements (O) or the radiation source (L) or the surface (S) to be scanned is made to oscillate about its central position, characterised in that in the case of maximum deflection, in one direction, of the oscillating focussing element (O) of the oscillating radiation source (L) or of the surface (S) to be scanned, the focus assumes a position in front of the radiation detector (PH) whereas in the case of maximum deflection in the other direction the focus assumes a position behind the radiation detector (PH), that the output signals (AS, BS, CS, DS) of the radiation detector (PH) are taken to a sum and difference former (SD), that a detector detects the maxima of the sum signal and, whenever a maximum occurs, causes the difference signal or the difference signals to be stored in a store (SP) and that a microprocessor (MP) cyclically interrogates the store and calculates, from the difference signal or the difference signals, a setting for magnitude for a setting member (J) which adjusts the radiation detector (PH).

## Revendications

1. Système d'exploration qui explore une surface (S) avec des faisceaux dans lequel les faisceaux émis par une source de rayonnement (L) sont réfléchis par la surface à explorer (S) et sont focalisés sur un détecteur de rayonnement (PH) au moyen d'un ou de plusieurs éléments de focalisation (O), détecteur qui se compose d'au moins deux détecteurs séparés (A, B, C. D), un signal de somme (T) et au moins un signal de différence (X, Y) étant formés à partir de leurs signaux de sortie (AS, BS, CS, DS), dans lequel soit l'un des éléments de focalisation (O), soit la source de rayonnement (L), soit la surface à explorer (S) étant soumis à des oscillations autour de sa position moyenne pour ajuster le détecteur de rayonnement (PH) perpendiculairement à l'axe optique, **caractérisé** en ce que le foyer, lors de la déviation maximale dans l'une des directions de l'élément de focalisation oscillant (O) ou de la source de rayonnement (L) oscillante ou de la surface à explorer (S) vient se placer devant le détecteur de rayonnement (PH) et vient se placer, au contraire, lors de la déviation maximale dans l'autre direction derrière le détecteur de rayonnement, que les signaux de sortie (AS, BS, CS, DS) du détecteur de rayonnement (PH) sont amenés à un organe totalisateur et formateur de différence (SD), qu'un détecteur (MD) détecte les maxima du signal de somme (T) et provoque, à chaque fois qu'apparaît un maximum, la mémorisation du signal de différence ou des signaux de différence (X, Y) dans une mémoire (SP), qu'un microprocesseur (MP) interroge la mémoire (SP) de manière cyclique et calcule, à partir du signal de différence ou des signaux de différence (X, Y) une variable réglante pour un composant de réglage (J) qui ajuste le détecteur de rayonnement (PH).

2. Système d'exploration selon la revendication 1, **caractérisé** en ce qu'une source de lumière est prévue comme source de rayonnement (L), qu'un photodétecteur est prévu comme détecteur de rayonnement (PH) et que des lentilles sont prévues comme éléments de focalisation (O).

3. Système d'exploration selon la revendication 2, **caractérisé** en ce que les faisceaux émis par la source de lumière (L) sont reflétés à angle droit par un séparateur de faisceaux à prismes (U), que les faisceaux reflétés à angle droit tombent sur la surface réfléchissante (S) au moyen d'une lentille de collimateur (K) et d'une lentille d'objectif (O) et que les faisceaux reflétés par la surface réfléchissante (S) sont dirigés sur le photodétecteur (PH) au moyen de la lentille d'objectif (O), de la lentille de collimateur (K), du séparateur de faisceaux à prismes (U) et d'une lentille cylindrique (LS).

4. Système d'exploration selon la revendication 3, **caractérisé** en ce que l'on soumet la lentille d'objectif (O) à des oscillations le long de son axe optique.

5. Procédé pour ajuster le détecteur de rayonnement (PH) d'un système d'exploration qui explore une surface (S) avec des faisceaux dans lequel les faisceaux émis par une source de rayonnement (L) sont réfléchis par la surface à explorer (S) et sont focalisés sur un détecteur de rayonnement (PH) au moyen d'un ou de plusieurs éléments de focalisation (O), détecteur qui se compose d'au moins deux détecteurs séparés (A, B, C, D), un signal de somme (T) et au moins un signal de différence (X, Y) étant formés à partir de leurs signaux de sortie (AS, BS, CS, DS), dans lequel soit l'un des éléments de focalisation (O), soit la source de rayonnement (L), soit la surface à explorer (S) étant soumis à des oscillations autour de sa position moyenne pour ajuster le détecteur de rayonnement (PH) perpendiculairement à l'axe optique, **caractérisé** en ce que le foyer, lors de la déviation maximale dans l'une des directions de l'élément de focalisation oscillant (O) ou de la source de rayonnement (L) oscillante ou de la surface à explorer (S) vient se placer devant le détecteur de rayonnement (PH) et vient se placer, au contraire, lors de la déviation maximale dans l'autre direction derrière le détecteur de rayonnement, que les signaux de sortie (AS, BS, CS. DS) du détecteur de rayonnement (PH) sont amenés à un organe totalisateur et formateur de différence (SD), qu'un détecteur (MD) détecte les maxima du signal de somme (T) et provoque. à chaque fois qu'apparaît un maximum, la mémorisation du signal de différence ou des signaux de différence (X, Y) dans une mémoire (SP), qu'un microprocesseur (MP) interroge la mémoire (SP) de manière cyclique et calcule, à partir du signal de différence ou des signaux de différence (X, Y) une variable réglante pour un composant de réglage (J) qui ajuste le détecteur de rayonnement (PH).

Fig.1

Fig. 2

Fig.3